Europäisches Patentamt

European Patent Office

Office européen des brevets

(11) Publication number: 0 356 755
A1

# EUROPEAN PATENT APPLICATION

(21) Application number: 89114425.5

(22) Date of filing: 04.08.89

(51) Int. Cl.⁵: A01C 21/00 , C05G 3/00

(30) Priority: 08.08.88 DE 3827179

(43) Date of publication of application:
07.03.90 Bulletin 90/10

(84) Designated Contracting States:
AT BE CH DE ES FR GB GR IT LI LU NL SE

(71) Applicant: AGLUKON SPEZIALDUNGER GMBH
Heerdter Landstrasse 199
D-4000 Dusseldorf 11(DE)

(72) Inventor: Sommer, Karl, Prof. Dr.
Kapellenstrasse 27
D-5300 Bonn 1(DE)
Inventor: Bürger, Horst, Dr.
In der Schindskaule 9
D-5000 Köln 90(DE)
Inventor: Kohl, Wilhelm, Dr.
Neusser Strasse 74
D-4047 Dormagen 11(DE)
Inventor: Kloth, Bernhard, Dr.
Schirmerstrasse 29
D-5000 Köln 30(DE)
Inventor: Jaschkowitz, Michael
Buchenstrasse 20a
D-4154 Tönisvorst 1(DE)

(54) Device for slow release fertilisation.

(57) A device for a slow-release fertiliser based on ammonium for low nitrate plant feeding, which comprises a hollow body having an opening, in which the opening has a size in relation to the surface area of the hollow body of 1:10 to 1:10,000, and the hollow body is filled with a mixture of an ammonium fertiliser and a carrier material.

EP 0 356 755 A1

## · DEVICE FOR SLOW RELEASE FERTILISATION

This invention relates to a device for a slow-release fertiliser based on ammonium in a low nitrate plant feed.

For general health reasons, plant cultivation, especially vegetable cultivation, with nitrogen fertilisers is confronted with a dual requirement.

The concentration of nitrate in vegetables above the intake levels of 250 mg $NO_3$ per kilogram of fresh matter must be avoided and washing of nitrate from fertilisers into the surface ground water above the legal limit for drinking water of 50 mg $NO_3$ per litre must be prevented. When providing nitrogen at a rate of 100 to 350 kg nitrogen per hectare for various arable and/or vegetable crops, with a medium nitrogen use of 70%, disregarding the often considerable amounts of easily mineralisable harvest residues left on the field after growth, the legal limits are, in practice, often considerably exceeded.

It is not necessary just to have the so-called over fertilisation in order to exceed the limits of nitrate. The dynamics of nitrogen turnover as well as the mobility of nitrate in the soil depending on weather patterns and the relatively low rooting of certain plants, besides an often low surface covering, make such limits, under the conditions of conventional agricultural and/or horticultural practice, practically uncontrollable.

It is known that corrective measures in the fertiliser system have been tried such as late application of nitrogen in the soil or through a reduced nitrogen fertilisation, but this only slightly reduces the problem.

Commercially available nitrogen fertilisers by a process of conversion in the soil normally lead to a nitrogen provision to the plants as nitrate. It must be taken into account that plants cannot themselves sensibly regulate their nitrogen uptake. In order to overcome this inadequacy, various processes for nitrogen fertilisation have been developed, based on the use of partial release nitrogen fertilisers or by the development of so-called slow release fertilisers of an organic condensate with graded mineralisability and/or mineral fertiliser granules with permeable artificial coatings and regulated fertiliser release.

The object of the invention is to provide plants with sufficient nitrogen over their whole vegetation period and corresponding to the intensity of their growth, without significantly burdening the environment and so that plants contain nitrate only in tolerable amounts.

This object is solved according to the invention by a hollow body of plastic having an opening, in which the opening has a size in relation to the surface area of the hollow body of 1:10 to 1:10,000, and the hollow body is ·filled with a mixture of an ammonium fertiliser, optionally with addition of urea, a carrier material and a nitrification inhibitor, and optionally a urease inhibitor if urea is present.

Suitable ammonium salts include ammonium sulphate, ammonium phosphate and ammonium magnesium phosphate.

In the hollow body there can also be included other essential as well as useful feeding elements, with the exception of nitrogen as nitrate, without affecting the principle functionability of the device of the invention.

It is further possible to include active ingredients such as amino acids, plant treating agents, phytohormones and/or synthetic growth regulators.

The hollow body can have a wide range of suitable shapes. It is preferred however that such shapes have a surface area in relation to the volume which is as small as possible, which means that it is preferably in the form of a sphere.

Cubes and cylinders, in which the length : width : height are 1 : 1 : 1 or height : diameter are 1 : 1 respectively, have also proved to be suitable because of the ease of positioning the opening in the hollow body.

The opening in the hollow body can have a wide range of suitable shapes. However, on technical grounds it is preferably round.

The opening in the hollow body has, depending on the species of plant to be fertilised and on the purpose of the fertilisation · treatment of young plants or total treatment of plants up to harvest - a size of 0.3 to 100 $mm^2$.

The hollow body comprises any suitable material which is inert to the soil and is preferably a plastic, such as for example polyurethane, an alkyd resin, an alkylate, an epoxide, polypropylene or polyethylene.

Suitable carrier materials are any materials which can be thoroughly impregnated by moistening with dissolved fertiliser and which will strongly bind the solution containing the fertiliser to reduce the possibilities of diffusion. The carrier material must allow the roots of the plants to grow. Further, they must not react in the presence of dissolved salts. Suitable materials include clay minerals, such as for example attapulgite, bentonite, montmorillonite, illite and also gypsum.

Clay minerals which have been shown to be especially suitable are for example Edasil® (Agrar-Bentonit, Fa. Südchemie), with as low as possible amount of calcium carbonate. Gypsum and calcium silicate are also suitable structural adjuvants in combination with ammonium magnesium phosphate.

Nitrification inhibitor that can suitably be used dicyanodiamide. Dicyanodiamide can naturally also be replaced with other suitable nitrification inhibitors. By tolerating a lower level of activity, the device of the invention can omit the nitrification inhibitor. The same applies for the urease inhibitor when urea is used as a nitrogen source.

The device of the invention is suitable for both container culture and field cultivation such as for example in vegetable and ornamental cultivation or for plant breeding generally for example in multipots with reduced space for roots, but where high nitrogen needs for the plant result. It allows also a controlled nitrogen delivery in intensive cultivation in the field or under glass without large amounts of nitrogen release, especially under rainy conditions, putting stress on the ground water through nitrate leaching.

The device of the invention functions in such a way that because of the coating the dissolution of the ammonium fertiliser or its mixture with urea, as well as the uptake of ammonium or urea through plant roots, is limited to the area of the opening and the interior of the hollow body. Ammonium or urea thus only comes into contact with the plant as a limited store in the particular root system. The intensity of the uptake of ammonium and urea through the plant can be controlled in this way in the smallest space through points of phytotoxicity.

In contrast to nitrate, ammonium serves as a poorly tolerated nitrogen source for the plants, since it is phytotoxic in slightly raised concentrations. By using ammonium as a source according to the invention, its phytotoxicity can be used to regulate the nitrogen uptake of the plant. With its roots it cannot take up more ammonium, and if for example urea is added it also cannot take up more urea, in the area of the opening of the hollow body depot, nor can it grow with its roots in the inside of the hollow body, as it is able to bind the ammonium direct as amide in the root cells.

In comparison with commercially available slow release fertilisers, the invention is not a question of a nitrogen source dosed for the plants, but a freely available but correspondingly dosed source which can be taken up according to the growth intensity and is a fully available nitrogen source for the plant at all times. This form of nitrogen availability allows the plant to be given its nitrogen needs in a single amount which prevents damaging growth disturbances or poor development. Further, the nitrogen supply can be determined by the way the plant gains access to it, so that the requirements of the plant are not exceeded. Because of its stability in the soil and its exact dosability, this form of nitrogen fertilisation is environmentally friendly.

The advantages of the invention are especially as follows:

- in the transplanting of young plants into the field, especially in water protection zones, a sufficient nitrogen supply for these plants can be provided for as long as is necessary until a good root system has formed in its new position. Until now the otherwise conventional nitrogen fertilisation, for example, in vegetable culture, has had to be delayed. In this way it is possible to contribute to the prevention of nitrate leaching into ground water;

- nitrogen feeding of vegetables exclusively based on ammonium is made possible. In this way nitrate build up in the leaves of vegetables and also in the late Autumn can be limited. It contributes to better yields and better quality in comparison to conventional horticulture, and also to the so-called alternative cultivation processes;

- in combination with fertilisation using an ammonium source in the field, the control of weeds without use of herbicides can be used since there is a corresponding lack of nitrogen for the weeds. This has importance both from the economic viewpoint, and also from the ecological viewpoint;

- in land with very high pH'S in which pH-dependent trace elements supply to the plants based on an excess of OH-ions is disturbed in the soil, an improvement in cationic trace element supply through local supply is possible;

- through regulated destruction of organic harvest residues, the soil structure can be specifically influenced. This has importance both for improvement in soil fertility and also for protection against erosion;

- the root growth of the plants is specifically protected, and with it the feed uptake can be improved and

- the crop and root residues with a wide C/N ratio in the soil can be improved, with residual nitrogen from the fertiliser being biologically bound in the non-growth stage and before leaching can be prevented.

The essential advantage of the invention is that nitrate is excluded from the nitrogen circulation in the soil and ammonium is put in its place. In the present state of knowledge the use of ammonium instead of nitrate leads to no health risks.

Preparation Example 1

50% by weight of ammonium sulphate, 3% by weight dicyanodiamide and 47% by weight clay minerals (Edasil®) were intimately mixed together and formed into a dough with water, which was then worked into spheres and finally dried without letting fertiliser salts crystallise out on the surface. The spheres were coated in a rotary coating process with a polyurethane coating so that a spherical body with a diameter of around 1.0 to 1.5 cm for plant cultivation was formed. An opening, 1 mm² in size was made in the plastic coating. These so prepared fertiliser spheres were put in the lower third of plant growth pots.

Preparation Example 2

50% by weight of ammonium magnesium phosphate, 6.2% by weight of urea, 3.0% by weight dicyanodiamide and 40.8 weight % clay minerals (Edasil®) were intimately mixed together, formed into a dough with water and worked into cylinders and finally dried without letting fertiliser salts crystallise on the surface. The cylinders were then covered with a plastic coating of polyurethane in a rotating drum so that cylinder with a length and diameter of around 2 cm was formed for cultivation of plants up the harvesting stage. An opening of a size of 0.3 mm² was formed in the plastic coating. These fertiliser depots, which contain the total nitrogen need for plants up to harvest, were put into fields in the root area of the plants, for example, by planting in plant holes.

Preparation Example 3

50% by weight of ammonium magnesium phosphate, 13.5% by weight ammonium sulphate, 3% by weight dicyanodiamide and 33.5% by weight clay minerals (Edasil®) were formed, in a similar way to Example 1, into spheres with a diameter of around 2.5 cm and an opening of about 0.3 mm².

Preparation Example 4

96% by weight ammonium magnesium phosphate, 3% by weight dicyanodiamide and 1% by weight fertiliser sticker was worked in a similar way to Example 1, but were pressed out in a dry form to give bodies of 2 cm diameter and a length of 1 cm. In these "tablets", an opening of 0.2 mm was formed in the plastic coating on one side in the area of the rotation point.

Claims

1. A device for a slow-release fertiliser based on ammonium for low nitrate plant feeding, characterised by a hollow body having an opening, in which the opening has a size in relation to the surface area of the hollow body of 1:10 to 1:10,000, and the hollow body is filled with a mixture of an ammonium fertiliser and a carrier material.

2. A device according to claim 1, characterised in that the mixture in the hollow body comprises a nitrification inhibitor.

3. A device according to claim 1 or 2, characterised in that the mixture in the hollow body includes urea, alone or together with a urease inhibitor.

4. A device according to any one of claims 1, 2 or 3, characterised in that the ammonium fertiliser is an ammonium salt.

5. A device according to claim 4, characterised in that the ammonium salt is selected from ammonium sulphate, ammonium phosphate and ammonium magnesium phosphate.

6. A device according to any one of the preceding claims, characterised in that the hollow body is a sphere and the opening is circular.

7. A device according to any one of the preceding claims, characterised in that the carrier comprises clay minerals.

8. A device according to any one of the preceding claims, characterised in that the hollow body comprises a plastic.

9. A device according to claim 8, characterised in that the plastic is polyurethane.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 748 115 (H.J. SOMMER et al.) <br> * Claims; column 9, line 42 - column 10, line 9; column 4, lines 3-33; column 6, lines 25-43 * | 1,3-5,8 | A 01 C 21/00 <br> C 05 G 3/00 |
| Y | | 2,6,7,9 | |
| Y | EP-A-0 068 287 <br> (FRAUNHOFER-GESELLSCHAFT ZUR FÖRDERUNG e.V) <br> * Page 2, lines 22-35; page 4, lines 12-33; page 6, line 32 - page 7, line 17 * | 7 | |
| Y | US-A-3 059 379 (O.J. ATTOE) <br> * Claims; column 2, lines 12-19; column 2, lines 58-61; column 2, line 70 - column 3, line 3 * | 6 | |
| Y | US-A-3 264 089 (L.I. HANSEN) <br> * Column 1, lines 13-22,60-69; column 2, lines 8-33; column 4, lines 8-10 * | 9 | TECHNICAL FIELDS SEARCHED (Int. Cl.5) |
| Y | EP-A-0 230 601 <br> (ASHLAND-SÜDCHEMIE-KERNFEST GmbH) <br> * Page 1, lines 36-52; page 2, lines 1-4; page 3, lines 25-28 * | 9 | C 05 G <br> A 01 C |
| Y | EP-A-0 230 299 (BASF AG) <br> * Page 1, left-hand column, lines 1-37 * | 2 | |
| Y | GB-A- 573 166 (H.J. HEASMAN) <br> * Claims * <br> ---      -/- | 6 | |

The present search report has been drawn up for all claims

| Place of search | Date of completion of the search | Examiner |
|---|---|---|
| THE HAGUE | 27-11-1989 | SCHUT,R.J. |

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 535 854 (D. BARNES et al.) <br> * Claims; page 1, lines 64-77; page 1, line 95 - page 2, line 25; page 2, lines 58-62; page 2, lines 109-120 * <br> --- | 1,8 | |
| Y | DE-A-1 945 108 (J.R. GEIGY AG) <br> * Page 14, lines 20-35; claim 1 * <br> ----- | 7 | |

TECHNICAL FIELDS
SEARCHED (Int. Cl.5)

The present search report has been drawn up for all claims

| Place of search | Date of completion of the search | Examiner |
|---|---|---|
| THE HAGUE | 27-11-1989 | SCHUT,R.J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P0401)